# EUROPÄISCHE PATENTANMELDUNG

(11) **EP 2 682 828 A1**
(43) Veröffentlichungstag der Anmeldung: **08.01.2014**
(21) Anmeldenummer: 13003356.6
(22) Anmeldetag: 02.07.2013
(51) Int. Cl.: G05B 19/042, G05B 19/418

(54) **Prozessleitsystem**

(30) Priorität: 06.07.2012 DE 202012006550 U
(71) Anmelder: ABB Technology AG, 8050 Zürich (CH)
(72) Erfinder: Kaiser, Alexander, 68542 Heddesheim (DE); Danzer, Benjamin, 68167 Mannheim (DE); Grossmann, Daniel, 69189 Schriesheim (DE)
(74) Vertreter: Marks, Frank

(57) **Zusammenfassung**

Die Erfindung betrifft ein Prozessleitsystem zur automatisierten Steuerung verfahrenstechnischer Anlagen mit einem Geräteverwaltungssystem, wobei das Prozessleitsystem aus mindestens einer zentralen Einrichtung sowie einer Mehrzahl von Feldgeräten besteht und wobei das Geräteverwaltungssystem mindestens eine Funktion zur Integration eines Feldgeräts in das Prozessleitsystem umfasst. Zur Übermittlung von Erfahrungen der Anwender an den Systemanbieter wird vorgeschlagen, dass mindestens eine Komponente des Prozessleitsystems ausgebildet ist, dem Anwender eine Benutzerschnittstelle zur Bewertung (2) der Integrationslösung zur Verfügung zu stellen, die Bewertung des Anwenders zu erfassen und die Bewertung des Anwenders zur Auswertung an den Systemanbieter zu übertragen.

## Beschreibung

Die Erfindung betrifft ein Prozessleitsystem zur automatisierten Steuerung verfahrenstechnischer Anlagen mit einem Geräteverwaltungssystem.

Derartige Prozessleitsysteme sind allgemein bekannt und bestehen aus mindestens einer zentralen Einrichtung sowie einer Mehrzahl von sogenannten Feldgeräten, die prozeßnah - im Feld - angeordnet sind und Mittel zur Erfassung einer physikalischen Prozeßgröße - Sensoren - oder zur Beeinflussung einer physikalischen Prozeßgröße - Aktoren - umfassen, die mit der mindestens einen zentralen Einrichtung verbunden sind und durch diese zentrale Einrichtung bedient werden. Beispielsweise ist ein gattungsbildendes Prozessleitsystem in EP 0 597 561 beschrieben.

Darüber hinaus ist bekannt, derartige Prozessleitsysteme mit einem Geräteverwaltungssystem auszurüsten, welche verschiedene Werkzeuge unterschiedlicher Technologien umfassen. Dazu gehören beispielsweise aber nicht abschließend Gerätebeschreibungen, die dem Fachmann unter den Begriffen Field Device Tool (FDT), Device Type Manager (DTM), Electronic Device Description (EDD) sowie Field Device Integration (FDI) geläufig sind. Diese Werkzeuge bilden Geräte-Typ-Repräsentanten, welche die Geräte-Fähigkeiten, die Parameter und deren Abhängigkeiten, aber auch Implementierungen von Benutzerschnittstellen enthalten können. Die Benutzerschnittstellen können zur Sichtung und Modifikation von Geräteparametern oder zum Auslösen von speziellen Gerätefunktionen ausgebildet sein.

Diese Geräte-Typ-Repräsentanten werden üblicherweise vom Gerätehersteller geliefert oder bereitgestellt und dann in ein Prozessleitsystem importiert bzw. installiert. Sobald installiert oder importiert können spezifische Geräte-Instanzen von diesem Typ gebildet werden, um eine spezifische Messstelle im Prozessleitsystem darzustellen.

Diese Werkzeuge erleichtern zudem die Integration von Feldgeräten in das Prozessleitsystem, indem Eigenschaften des jeweiligen Feldgeräts vorkonfiguriert in einer definierten Beschreibungssprache oder Geräteapplikation vorliegen. Derartige Geräteverwaltungssysteme sind beispielsweise in http://de.wikipedia.org/wiki/FDT/DTM sowie http://de.wikipedia.org/wiki/Device Description Language beschrieben.

Die Qualität der Integrationsmechanismen in Bezug auf Stabilität, Robustheit, Benutzerfreundlichkeit sowie die Interoperabilität mit anderen Komponenten ist sehr unterschiedlich und darüber hinaus von der spezifischen Topologie des Prozessleitsystems abhängig.

Der Anwender des Prozessleitsystems sowie der jeweiligen Integrationslösung und des Verwaltungssystems ist an die Fähigkeiten und die Qualität des jeweiligen Systems gebunden, ohne auftretende Probleme an den Systemanbieter melden zu können. Andererseits ist der Systemanbieter gehindert, adäquat auf Mängel oder Fehler eines beanstandenden Sytems oder dessen Komponenten zu reagieren. Es besteht demnach ein Bedarf, die Erfahrungen der Anwender auf geeignete Weise an den Systemanbieter zu übermitteln.

Der Erfindung liegt daher die Aufgabe zugrunde, das gattungsgemäße Prozessleitsystem dahingehend zu verbessern, dass die Erfahrungen der Anwender dem Systemanbieter systemintegriert übermittelt werden.

Erfindungsgemäß wird diese Aufgabe durch die Mittel des Patentanspruchs 1 gelöst. Vorteilhafte Ausgestaltungen der Erfindung sind in den rückbezogenen Ansprüchen angegeben.

Die Erfindung geht aus von einem gattungsgemäßen Prozessleitsystem mit den Merkmalen des Oberbegriffs des Patentanspruchs 1.

Erfindungsgemäß weist mindestens eine Komponente des Prozessleitsystems die Eigenschaften auf,
a) Dem Anwender eine Benutzerschnittstelle zur Bewertung der Integrationslösung zur Verfügung zu stellen,
b) Die Bewertung des Anwenders zu erfassen und
c) Die Bewertung des Anwenders zur Auswertung an den Systemanbieter zu übertragen.

Vorteihafterweise ist der Anwender des Prozessleitsystems sowie dessen Komponenten ein Teil des Geräteverwaltungssystems, indem seine Rückmeldung an den Systemanbieter als Qualitätskriterium in die Wartung des Prozessleitsystems integriert ist. Folglich ist der Systemanbieter in die Lage versetzt, die Qualität seiner Produkte entsprechend den Bewertungen der Benutzer zu überprüfen und zu verbessern und ggf. Lieferanten und Partner über Verbesserungspotenziale zu informieren. Dadurch wird der Systemanbieter in die Lage versetzt, die Zuverlässigkeit seiner Geräte und Einrichtungen und der durch Dritte gelieferte Geräte und Einrichtungen zu verbessern und die Lebensdauer der gesamten Automatisierungslösung erhöhen.

Darüber hinaus trägt die erfindungsgemäße Lösung dazu bei, die Integration von Systemkomponenten reibungsloser und zuverlässiger zu durchzuführen, da der Systemanbieter zeitnah und spezifisch über Probleme bei der Systemintegration informiert wird.

Insbesondere Inkompatibilitäten sind rasch erkennbar, so dass die entsprechenden Geräte typseletiv blockierbar sind.

Nach einem weiteren Merkmal der Erfindung ist eine normierte Bewertung der Integrationslösung vorgesehen. Dabei ist eine limitierte Anzahl von Wertungsstufen vorgesehen, die sich an zweckmäßigerweise an geläufigen Bertungssystemen orientiert. Im einfachster Ausführung kann diese Normierung eine fünfstufige Bewertungsskala nach Art von Schulnoten - beste Beurteilung bei kleinster Einheit - oder nach Art der Hotelbewertung - beste Bewertung bei größter Einheit - umfassen. Vorteilhafterweise wird dem Benutzer ein einfaches und überschaubares Instrument zur Bewertung der Integrationslösung zur Verfügung gestellt, das keinerlei Schulung seitens des Benutzers bedarf und spontan einsetzbar ist.

Nach einem weiteren Merkmal der Erfindung ist die normierte Bewertung mehrstufig gegliedert. Die Gliederung ist dabei abhängig von der Struktur der Systemkomponenten und bildet deren Technologie spezifisch ab.

Vorteilhafterweise sind auf diese Weise einzelne Aspekte der Integrationslösung für sich dediziert bewertbar. Dadurch wird vermieden, dass ein beanstandungswürdiger Teilaspekt der Integrationslösung zu einer negativen Bewertung der Gesamtlösung führt.

Nach einem weiteren Merkmal der Erfindung ist die normierte Bewertung um ein Freitextfeld ergänzt.

Vorteilhafterweise wird dem Benutzer dadurch die Möglichkeit eröffnet, seine Bewertung verbal zu ergänzen und im Problemfall die gemachten Erfahrungen zu beschreiben.

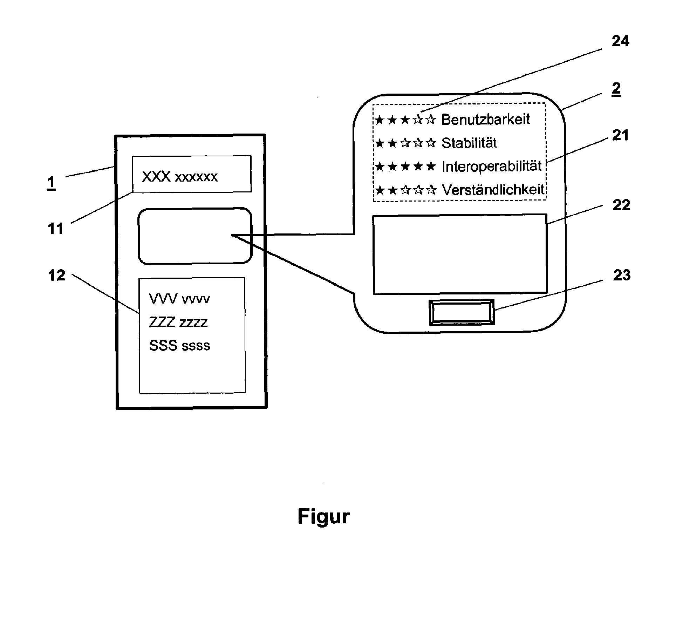

Die Erfindung wird nachstehend anhand eines Ausführungsbeispiels näher erläutert. In der einzigen Figur ist eine integrierbare Systemkomponente eines Prozessleitsystems auf der Ebene eines Geräteverwaltungssystems dargestellt.

Im Einzelnen umfasst das Geräteverwaltungssystem des Prozessleitsystems eine Gerätebibliothek 1, auch Gerätekatalog genannt, in der die integrierbaren Systemkomponenten **11,** beispielsweise ein Gerät, umfänglich ihrer Eigenschaften **12,** Versionsstände, Konfigurationen usw. abgebildet sind. Jeder installierte oder importierte Geräte-Typ-Repräsentant wird dem Nutzer in einer Liste zur Auswahl angeboten, um den auf das Gerät passenden Geräte-Typ-Repräsentanten für die Instanziierung auszuwählen. Ferner umfasst diese Gerätebibliothek 1 mindestens eine Funktion zur Systemintegration der jeweiligen Systemkomponente.

Erindungsgemäß umfasst diese Gerätebibliothek **1** darüber hinaus mindestens eine Funktion zur Bewertung **2** der Systemintegration durch den Benutzer.

Der Benutzer hat also Instanzen, die auf dem installierten Typ basieren erzeugt, die spezifische Messstellen in seiner Anlage darstellen. Für jede dieser spezifischen Messstellen steht ein physikalisches, in der Anlage installiertes Gerät **11** welches der Benutzer mit den Mitteln des installierten Geräte-Repräsentanten konfiguriert, überwacht und diagnostiziert.

Der Benutzer arbeitet nun mit der gelieferten Software, den Benutzeroberflächen, den vom Gerätehersteller zusammengestellten Beschreibungen der Gerätefähigkeiten.

Nachdem der Benutzer seine Arbeit abgeschlossen hat (oder während der Arbeit), kann er eine Meinung zu dem vom Gerätehersteller gelieferten Produkt haben bezüglich dessen Integrationseigenschaften, wie beispielsweise aber nicht abschließend Benutzbarkeit, Stabilität, Performance, Verständlichkeit. Diese Integrationseigenschaften sind in Form einer normierte Bewertung **21** auf einer vorgegebenen Skala von Wertungsstufen **24** angeordnet. Die Skala ist aus einer der Normierung folgenden Anzahl von Symbolen, beispielsweise Sterne, gebildet. Der Wert der Bewertung ist dabei proportional zur Anzahl der ausgewählten Symbole.

In weiterer Ausgestaltung der Erfindung umfasst die Funktion zur Bewertung **2** der Systemintegration ein Freitextfeld **22** zur verbalen Ergänzung der normierten Bewertung sowie zur Beschreibung der Erfahrungen in Problemfällen.

Darüber hinaus umfasst die Funktion zur Bewertung **2** der Systemintegration Bedienmittel **23** zum Absenden der eingetragenen Bewertung.

Es liegt im Rahmen der Erfindung, dass während verschiedener Phasen des Anlagen-oder Geräte-Lebenszyklus mehrere Bewertungen abgegeben werden. Dazu kann vorgesehen sein, jede Bewertung mit einem Zeitstempel zu versehen.

Die Bewertung wird hinsichtlich des gesamten Geräte-Typ-Repräsentanten abgegeben und kann dann entweder über eine potentiell vorhandene, direkte Verbidung zum Prozessleitsystemlieferant oder über einen Export in eine Datei oder ähnliche Mechanismen, indirekt dem Prozessleitsystemlieferant übermittelt werden. Der Prozessleitsystemlieferant hat dann die Möglichkeit im Sinne der Kundenzufriedenheit zu handeln.

### Bezugszeichenliste

- 1: Gerätebibliothek
- 11: Systemkomponente
- 12: Eigenschaft
- 2: Bewertung
- 21: normierte Bewertung
- 22: Freitextfeld
- 23: Bedienmittel
- 24: Wertungsstufen

## Patentansprüche

1. Prozessleitsystem zur automatisierten Steuerung verfahrenstechnischer Anlagen mit einem Geräteverwaltungssystem, wobei das Prozessleitsystem aus mindestens einer zentralen Einrichtung sowie einer Mehrzahl von Feldgeräten besteht und wobei das Geräteverwaltungssystem mindestens eine Funktion zur Integration eines Feldgeräts in das Prozessleitsystem umfasst,
**dadurch gekennzeichnet,**
**dass** mindestens eine Komponente des Prozessleitsystems die Eigenschaft aufweist,
a) dem Anwender eine Benutzerschnittstelle zur Bewertung (2) der Integrationslösung zur Verfügung zu stellen,
b) die Bewertung des Anwenders zu erfassen und
c) die Bewertung des Anwenders zur Auswertung an den Systemanbieter zu übertragen.

2. Prozessleitsystem nach Anspruch 1
**dadurch gekennzeichnet,**
**dass** die Bewertung (2) der Integrationslösung durch eine limitierte Anzahl von Wertungsstufen (24) normiert ist.

3. Prozessleitsystem nach Anspruch 2
**dadurch gekennzeichnet,**
**dass** die Bewertung (2) der Integrationslösung mehrstufig (21, 22) gegliedert ist.

4. Prozessleitsystem nach einem der Ansprüche 2 bis 3
**dadurch gekennzeichnet,**
**dass** die normierte Bewertung (2) um ein Freitextfeld (22) ergänzt ist.
